# EUROPÄISCHE PATENTANMELDUNG

(11) **EP 4 043 756 A1**
(43) Veröffentlichungstag der Anmeldung: **17.08.2022**
(21) Anmeldenummer: 21157326.6
(22) Anmeldetag: 16.02.2021
(51) Int. Cl.: F16H 57/04

(54) **PLANETENTRÄGERANORDNUNG, PLANETENGETRIEBE, ANTRIEBSSTRANG, WINDKRAFTANLAGE UND COMPUTERPROGRAMMPRODUKT**

(71) Anmelder: Flender GmbH, 46395 Bocholt (DE)
(72) Erfinder: Bröcker, Sarah, 46395 Bocholt (DE); Degeling, Markus, 46414 Rhede (DE); König, Christian, 44805 Bochum (DE); Vennemann, Michael, 48703 Stadtlohn (DE)
(74) Vertreter: Michalski Hüttermann & Partner Patentanwälte mbB

(57) **Zusammenfassung**

Die Erfindung betrifft eine Planetenträgeranordnung (30), die einen Planetenträger (10) umfasst, der drehbar in einem Gehäuse (22) angeordnet ist. Die Planetenträgeranordnung (30) weist ein Schmierstoffaufnahmeteil (18) auf, in dem eine Zufuhröffnung (19) ausgebildet ist. Erfindungsgemäß ist am Schmierstoffaufnahmeteil (18) und/oder an einem Schmierstoffabgabeteil (28), das mit dem Gehäuse (22) verbunden ist, zumindest eine zur umlaufenden Zufuhröffnung (19) parallele Dichtungsnut (26) zur Ausbildung einer dichtenden Kontaktfläche (29) ausgebildet. Die Erfindung betrifft auch ein Planetengetriebe (20), das mit einer derartigen Planetenträgeranordnung (20) versehen ist. Ebenso betrifft die Erfindung einen Antriebsstrang (60), der ein solches Planetengetriebe (20) aufweist und eine Windkraftanlage (70), die über einen derartigen Antriebsstrang (60) verfügt. Ferner betrifft die Erfindung ein Computerprogrammprodukt (90), das zum Simulieren eines Betriebsverhaltens einer erfindungsgemäßen Planetenträgeranordnung (30) ausgebildet ist.

## Beschreibung

Die Erfindung betrifft eine Planetenträgeranordnung und ein Planetengetriebe, das über eine entsprechende Planetenträgeranordnung verfügt. Ebenso betrifft die Erfindung einen Antriebsstrang, der mit einem solchen Planetengetriebe ausgestattet ist und eine Windkraftanlage mit einem derartigen Antriebsstrang. Gleichermaßen betrifft die Erfindung eine Industrie-Applikation, die ein erfindungsgemäßes Planetengetriebe aufweist. Ferner betrifft die Erfindung ein Computerprogrammprodukt, das zum Simulieren eines Betriebsverhaltens einer Planetenträgeranordnung ausgebildet ist.

Die Patentschrift US 8,636,615 B2 offenbart ein Planetengetriebe für eine Windkraftanlage, das über eine eingangsseitige Planetenstufe mit einem Planetenträger verfügt. Der Planetenträger ist beidseitig in einem Planetenträgerlager drehbar gelagert und an einer generatorseitigen Nabe mit einem Schmierstoffaufsatz versehen. Der Schmierstoffaufsatz ist unmittelbar benachbart zum generatorseitigen Planetenträgerlager positioniert. Am Schmierstoffaufsatz sind auf seiner Außenseite Dichtungsringe angeordnet, die mit einer Schmierstoffabgabe zusammenwirken.

Aus der Druckschrift EP 1 488 139 B1 ist eine Planetenträger in einem Getriebe einer Windkraftanlage bekannt, der über eine Gehäusewandung mit Öl versorgt wird. Im Bereich einer Wange des Planetenträgers wird Öl über einen dort angebrachten Ring mit einem U-Profil von der Gehäusewandung in den Planetenträger übergeben.

Das Dokument WO 2020/001942 A1 offenbart ein Planetengetriebe, das für eine Windkraftanlage geeignet ist und drei Planetenstufen aufweist. Die Planetenstufen können dabei fünf oder mehr Planetenräder aufweisen.

Es werden Planetengetriebe mit zunehmendem Nenndrehmoment gefordert, für die ein verschleißarmer und zuverlässiger Betrieb angestrebt wird, beispielweise für Windkraftanlagen. Dies umfasst unter anderem eine zuverlässige Schmierstoffversorgung. Infolge zunehmender Baugrößen ergeben sich steigende Anforderungen an die Schmierstoffversorgung von Planetenträgern, insbesondere bei gleitgelagerten Planetenrädern. Ebenso wird eine einfache und kosteneffiziente Herstellung gefordert. Der Erfindung liegt die Aufgabenstellung zugrunde, eine Planetenträgeranordnung bereitzustellen, die in zumindest einem der skizzierten Aspekte eine Verbesserung bietet.

Die Aufgabenstellung wird durch eine erfindungsgemäße Planetenträgeranordnung gelöst. Die Planetenträgeranordnung umfasst einen Planetenträger, der in einem Gehäuse drehbar angeordnet ist und dazu ausgebildet ist, eine Mehrzahl von Planetenrädern drehbar aufzunehmen. Der Planetenträger weist ein Schmierstoffaufnahmeteil auf, das dazu ausgebildet ist, einen abgegebenen Schmierstoff in den Planetenträger einzuleiten. Der Schmierstoff, beispielsweise ein Öl, dient zu einer Schmierstoffversorgung einer Lagerung für die Planetenräder, die im Planetenträger montierbar sind. Am Schmierstoffaufnahmeteil ist hierzu eine Zufuhröffnung ausgebildet. Die Zufuhröffnung ist dazu ausgebildet, Schmierstoff im Wesentlichen in Radialrichtung auf eine drehende Komponente zu führen. Durch die Zufuhröffnung wird der abgegebene Schmierstoff gesammelt und in einen im Planetenträger ausgebildeten Schmierstoffkanal einleitbar. Die Zufuhröffnung kann beispielsweise umlaufend als Nut ausgebildet sein, oder als eine Bohrung in Radialrichtung. Das Schmierstoffaufnahmeteil wirkt mit einem Schmierstoffabgabeteil zusammen, das mit dem Gehäuse verbunden ist, also stationär ausgebildet ist. Über die Schmierstoffabgabeteil wird der Schmierstoff zugeführt und im Bereich des Schmierstoffaufnahmeteils abgegeben. Erfindungsgemäß ist am Schmierstoffaufnahmeteil und/oder am Schmierstoffabgabeteil zumindest eine Dichtungsnut ausgebildet, die im Wesentlichen parallel zur Zufuhröffnung ausgebildet ist, also im Wesentlichen in Radialrichtung. Die zumindest eine Dichtungsnut ist ferner dazu ausgebildet, eine dichtende Kontaktfläche auszubilden, durch die ein axialer Austritt von Schmierstoff unterbunden wird. Die Zufuhröffnung und die zumindest eine Dichtungsnut sind separat voneinander, so dass zwischen einer Schmierstoffübergabe in den drehbaren Planetenträger und dessen Abdichtung eine funktionelle Trennung verwirklicht wird. Die Zufuhröffnung und die zumindest eine Dichtungsnut sind infolgedessen unabhängig voneinander auf ihre jeweiligen Funktionen hin auslegbar. Dadurch ist eine gesteigerte Dichtwirkung bei gleichzeitig ausreichender Schmierstoffversorgung für den Planetenträger erzielbar. Darüber hinaus sind in der erfindungsgemäßen Planetenträgeranordnung axiale Verlagerungen, radiale Verlagerungen und/oder Verkippungen des Planetenträgers aufnehmbar, also ausgleichbar.

In einer Ausführungsform der beanspruchten Planetenträgeranordnung ist in der zumindest einen Dichtungsnut ein Dichtring zumindest teilweise aufgenommen, durch den die Dichtungswirkung hervorgerufen wird. Der Dichtring ist derart in der zumindest einen Dichtungsnut angeordnet, dass dieser gleichzeitig mit dem Schmierstoffabgabeteil und dem Schmierstoffaufnahmeteil in Kontakt steht. Der Dichtring kann beispielsweise aus einem metallischen Werkstoff hergestellt sein, insbesondere Kupfer oder einer Kupferlegierung. Dadurch wirkt der Dichtring technisch vergleichbar mit einem Kolbendichtring im Fahrzeugbau. Ein Dichtring aus einem metallischen Werkstoff bietet ein hohes Maß an Verschleißfestigkeit. Folglich ist die beanspruchte Planetenträgeranordnung vorteilhaft in schwierig zugänglichen Anwendungen, beispielsweise Planetengetrieben in Windkraftanlagen, insbesondere Off-Shore-Windkraftanlagen, einsetzbar. Alternativ kann der Dichtring auch aus einem Kunststoff hergestellt sein. Dichtringe aus Kunststoff sind relativ weich und bieten durch ihr elastisches Verhalten eine erhöhte Dichtwirkung und eine gesteigerte Kosteneffizienz in der Herstellung.

Des Weiteren kann die dichtende Kontaktfläche an einer axial äußeren Stirnfläche der zumindest einen parallelen Dichtungsnut ausgebildet sein. Unter der axial äußeren Stirnfläche ist hierbei eine im Wesentlichen umlaufenden Wandung der Dichtungsnut zu verstehen, die diese auf einer der Zufuhröffnung abgewandten Seite begrenzt. Zum Herstellen der dichtenden Kontaktfläche kann der Dichtring gegen die axial äußere Stirnfläche der zumindest einen Dichtungsnut gedrückt werden. Insbesondere bei flachen Dichtringen sind deren Stirnflächen nutzbar, wodurch sich ein vergrößerter Flächenkontakt ergibt. Dieser resultiert in einer gesteigerten Dichtwirkung. Die Andrückkraft, durch die der Dichtring an die axial äußere Stirnfläche angedrückt wird, kann durch einen im Schmierstoff vorliegenden Druck ausgeübt werden. Dadurch ist ein selbsttätiges Justieren der Dichtwirkung in einfacher Weise möglich.

Darüber hinaus kann das Schmierstoffaufnahmeteil zu einem zerstörungsfreien Demontieren vom Planetenträger ausgebildet sein. Das Schmierstoffaufnahmeteil kann dazu als vom Planetenträger separate Komponente ausgebildet sein. Der Planetenträger ist infolgedessen einfacher fertigbar und insgesamt wird der Fertigungsaufwand für die beanspruchte Planetenträgeranordnung reduziert. Das Schmierstoffaufnahmeteil kann aus einem Werkstoff hergestellt sein, der eine höhere Verschleißfestigkeit aufweist als der Planetenträger, beispielsweise einem Stahl. Alternativ oder ergänzend kann das Schmierstoffaufnahmeteil auch aus einem Werkstoff mit vorteilhaften Gleiteigenschaften ausgebildet sein, beispielsweise aus einer Kupfer-Legierung. Weiter alternativ kann das Schmierstoffaufnahmeteil auch aus einer Kombination von mehreren derartigen Werkstoffen hergestellt sein. Dies erlaubt es, den Planetenträger beispielsweise aus einem kosteneffizienten Gusswerkstoff herzustellen oder eine relativ raue Oberfläche auf dem Planetenträger zu belassen, ohne dadurch die Dichtwirkung an der zumindest einen Dichtungsnut zu beeinträchtigen. Die beanspruchte Planetenträgeranordnung ermöglicht eine bedarfsgerechte Werkstoffauswahl, und somit eine gesteigerte Wirtschaftlichkeit. Alternativ können das Schmierstoffaufnahmeteil und der Planetenträger auch einstückig ausgebildet sein.

In einer weiteren Ausführungsform der beanspruchten Planetenträgeranordnung kann der Planetenträger drehbar in einer Lageranordnung aufgenommen sein. Die Lageranordnung kann auf einer dem Schmierstoffaufnahmeteil abgewandten Seite des Planetenträger angeordnet sein. Die Lageranordnung umfasst zumindest ein Wälzlager, ein Gleitlager oder eine Kombination von solchen. Ferner kann der Planetenträger ausschließlich in der Lageranordnung auf der dem Schmierstoffaufnahmeteil abgewandten Seite drehbar aufgenommen sein. Aus einer derartigen Lagerung des Planetenträgers können erhebliche radiale und/oder axiale Verlagerungen zwischen dem Schmierstoffaufnahmeteil und dem Schmierstoffabgabeteil resultieren. Die dichtende Kontaktfläche an der zumindest einen Dichtungsnut erlaubt eine hinreichende radiale und/oder axiale Verschiebbarkeit. Dementsprechend wird in einer breiten Spanne von Betriebszuständen, die mit entsprechenden Auslenkungen des Planetenträgers einhergehen, zuverlässig eine Dichtwirkung gewährleistet. Insbesondere kann der Dichtring bei einer Auslenkung des Planetenträgers an der axial äußeren Stirnfläche entlanggleiten. Durch die beanspruchte Planetenträgeranordnung wird insbesondere für Planetengetriebe mit erhöhtem Nenndrehmoment, beispielsweise in Windkraftanlagen, eine verlustarme und zuverlässige Schmierstoffversorgung bereitgestellt. Eine verlustarme und zuverlässige Schmierstoffversorgung wiederum ermöglicht die zuverlässige Verwendung von Gleitlagern für die Planetenräder. Alternativ kann der Planetenträger auch lagerfrei im Gehäuse angeordnet sein. Der Begriff "lagerfrei" bezeichnet damit die Aufnahme des Planetenträgers selbst, und nicht dass Planetenlager entbehrlich sind. Der Planetenträger ist hierbei über eine Eingangswelle und eine Ausgangswelle, die als Sonnenwelle ausgebildet sein kann, drehbar gelagert. Beispielsweise kann eine Rotorwelle eines Antriebsstrangs, die mit einem Mehrblattrotor verbunden ist auf einer Seite als Lagerung dienen. Auf der gegenüberliegenden Seite kann die Sonnenwelle im Planetenträger zu dessen Lagerung dienen. Bei derartigen Planententrägeranordnungen können am Schmierstoffaufnahmeteil ebenfalls erhebliche radiale und/oder axiale Verlagerungen auftreten, die durch die beanspruchte Planetenträgeranordnung ausgleichbar sind. Die beanspruchte Planetenträgeranordnung erlaubt es deshalb, für ein solches Planetengetriebe eine zuverlässige Schmierstoffversorgung bereitzustellen. Weiter alternativ kann der Planetenträger fliegend angeordnet sein, also nur drehmomentübertragend mit einer antreibenden Welle verbunden sein.

Ferner kann in der beanspruchten Planetenträgeranordnung die zumindest eine Dichtungsnut eine radiale Tiefe aufweisen, die zumindest einer maximalen Radialauslenkung des Schmierstoffaufnahmeteils entspricht. Die maximale Radialauslenkung kann dabei einer Radialauslenkung entsprechen, die in einem dimensionierenden Auslegungsfall zu erwarten ist. Unter der radialen Tiefe ist hierbei die radiale Abmessung der zumindest einen Dichtungsnut bis zum Nutgrund zu verstehen. Die maximale Radialauslenkung entspricht dem maximalen Versatz des Schmierstoffaufnahmeteils in Radialrichtung in einem bestimmungsgemäßen Betrieb. Die radiale Tiefe der zumindest einen Dichtungsnut ist in einfacher Weise konstruktiv anpassbar, so dass die beanspruchte Planetenträgeranordnung für eine breite Spanne an zulässigen Betriebszuständen anpassbar ist. Insbesondere weist die zumindest eine Dichtungsnut eine radiale Tiefe auf, bei der im bestimmungsgemäßen Betrieb der entsprechende Dichtring zum Nutgrund in Radialrichtung beabstandet bleibt.

Des Weiteren kann am Schmierstoffabgabeteil und/oder am Schmierstoffaufnahmeteil eine Radialdichtfläche ausgebildet sein. Die Radialdichtfläche ist an einem Abschnitt des Schmierstoffabgabeteils bzw. des Schmierstoffaufnahmeteils ausbildbar und zu einem Zusammenwirken mit einem Dichtring geeignet. Hierdurch wird wie Oberfläche des Dichtrings weiter ausgenutzt. Die Verwendung von größeren oder aufwendigeren Dichtmitteln im Zusammenspiel mit der zumindest einen Dichtungsnut ist folglich entbehrlich.

Darüber hinaus kann die Zufuhröffnung axial zwischen zwei Dichtungsnuten angeordnet sein. Die Dichtungsnuten können jeweils im Schmierstoffaufnahmeteil oder im Schmierstoffabgabeteil ausgebildet sein. Auch Kombinationen von mehr Dichtungsnuten ist möglich. Die beanspruchte Planetenträgeranordnung erlaubt es, entlang einer Umfangsrichtung die Zufuhröffnung beidseitig abzudichten. Durch zusätzliche Dichtungsnuten ist die Dichtwirkung an der Planetenträgeranordnung weiter steigerbar. Bei einer Ausführungsform, bei der die Dichtungsnuten im Schmierstoffzufuhrteil ausgebildet sind, kann die Zufuhröffnung axial von umlaufenden Wandungen umschlossen sein, die auch Wandungen der entsprechenden Dichtungsnut sind. Die Zufuhröffnung kann so mit erhöhten Toleranzen gefertigt werden, wodurch die Herstellung der beanspruchten Planetenträgeranordnung vereinfacht wird.

In einer weiteren Ausführungsform der beanspruchten Planetenträgeranordnung kann das Schmierstoffaufnahmeteil zumindest teilweise eine Nabe des Planetenträgers bilden. Der Planetenträger wird durch das Schmierstoffaufnahmeteil im Wesentlichen axial verlängert. Das Schmierstoffaufnahmeteil kann im Bereich der Zufuhröffnung einen Außendurchmesser von mindestens 150 mm, bevorzugt mindestens 200 mm, weiter bevorzugt mindestens 500 mm, besonders bevorzugt mindestens 700 mm, aufweisen. Durch einen derart hohen Außendurchmesser ergibt sich eine entsprechend hohe Länge der dichtenden Kontaktfläche. Der Erfindung liegt unter anderem die überraschende Erkenntnis zugrunde, dass diese eine hinreichende Dichtwirkung bietet, bei der die Schmierstoffverluste auch bei entsprechend großen Planetenträgern gewährleistet ist. Ferner kann das Schmierstoffaufnahmeteile einen lichten Innendurchmesser von mindestens 130 mm, bevorzugt mindestens 180 mm, weiter bevorzugt mindestens 450, besonders bevorzugt von mindestens 650 mm, aufweisen. Infolgedessen sind in der beanspruchten Planetenträgeranordnung Sonnenräder und Sonnenwellen mit entsprechendem Außendurchmesser einsetzbar. Dies wiederum ermöglicht die Verwendung von Planetenrädern mit reduziertem Durchmesser und eine erhöhte Anzahl an Planetenrädern in der Planetenträgeranordnung, insbesondere mindestens fünf Planetenräder. Ferner kann die Schmierstoffversorgung der Planetenräder durch eine geringe Anzahl an Bohrungen im Planetenträger herstellen.

In einer weiteren Ausführungsform der beanspruchten Planetenträgeranordnung sind die zumindest eine Dichtungsnut, die zugehörige axial äußere Stirnfläche, eine zugehörige Radialdichtfläche, der entsprechende Dichtring, und/oder die Dichtungsnut derart ausgebildet, dass bei einem vorgebbaren Druck des Schmierstoffs in Kombination mit einer vorgebbaren Drehzahl des Planetenträgers ein Übergang von einem Gleiten an der axial äußeren Stirnfläche zu einem Gleiten an der entsprechenden Radialdichtfläche erfolgt. Dies stellt einen Gleitübergang dar. Ebenso wird dadurch auch ein umgekehrter Übergang im Gleiten charakterisiert. Zum Vorgeben des Auslegungsdrucks und der zugehörigen Drehzahl des Planetenträgers ist zumindest die Dichtungsnut angepasst. Beispielsweise ist weist deren axial äußere Stirnfläche eine entsprechende Größe und/oder Oberflächenrauigkeit auf, durch die die vorliegende Haftreibung und/oder Gleitreibung charakterisiert ist. Der entsprechende Druck im Schmierstoff ist ein Auslegungsdruck und die zugehörige Drehzahl des Planetenträgers eine korrespondierende Auslegungsdrehzahl. Ferner kann die Planetenträgeranordnung dazu ausgebildet sein, dass durch eine Mehrzahl an Auslegungsdrücken und korrespondierenden Auslegungsdrehzahlen eine Gleitübergangscharakteristik vorliegt, also im Wesentlichen eine Kennlinie, die Betriebszustände beschreibt, bei denen ein Gleiten an einer der axial äußeren Stirnflächen in ein Gleiten an einer Radialdichtfläche übergeht, oder umgekehrt. Dadurch ist die Planetenträgeranordnung dahingehend auslegbar, dass in einer zu erwartenden Spanne an Betriebszuständen ein Verschleiß gezielt an einer der axial äußeren Stirnflächen oder einer Radialdichtfläche eintritt. Dies erlaubt ein gezieltes Ausnutzen von vorteilhaften Gleiteigenschaften der eingesetzten Werkstoffe.

Die skizzierte Aufgabenstellung wird ebenso durch ein erfindungsgemäßes Planetengetriebe gelöst. Das Planetengetriebe umfasst eine Planetenträgeranordnung, die nach gemäß einer der oben dargestellten Ausführungsformen ausgebildet ist. In einem montierten Zustand sind in der Planetenträgeranordnung Planetenräder und ein Sonnenrad drehbar angeordnet. Das Sonnenrad kann mit einer Sonnenwelle versehen sein, die für eine Planetenstufe mit der erfindungsgemäßen Planetenträgeranordnung als Ausgangswelle dient. Die Planetenräder können ferner jeweils über ein Gleitlager drehbar auf je einem Planetenradbolzen angeordnet sein. Die beschriebenen Vorteile der beanspruchten Planetenträgeranordnung erlauben einen zuverlässigen Betrieb von Gleitlagern zur drehbaren Lagerung der Planetenräder. Die erhöhte mechanische Beanspruchbarkeit von Gleitlagern ist folglich auch in anspruchsvollen Anwendungen zuverlässig nutzbar, beispielsweise Offshore-Windkraftanlagen.

In einer Ausführungsform des beanspruchten Planetengetriebes können in der Planetenträgeranordnung zumindest fünf Planetenräder, vorzugsweise zumindest sechs, besonders bevorzugt mindestens sieben Planetenräder drehbar angeordnet sein. Ferner kann die Planetenträgeranordnung in einer ersten Planetenstufe angeordnet sein. Neben der ersten Planetenstufe kann das Planetengetriebe auch eine zweite und eine dritte Planetenstufe aufweisen. Die erste, zweite und dritte Planetenstufe können dabei in Reihe hintereinandergeschaltet angeordnet sein. Der Aufbau solcher Planetengetriebe sind in der Druckschrift WO 2020/001942 A1 beschrieben. Der Offenbarungsgehalt von WO 2020/001942 A1 wird durch Verweisung in die vorliegende Anmeldung mit einbezogen.

Ebenso wird die zugrundeliegende Aufgabenstellung durch einen erfindungsgemäßen Antriebsstrang gelöst, der zum Einsatz in einer Windkraftanlage ausgebildet ist. Der Antriebsstrang ist mit einer Rotorwelle der Windkraftanlage drehmomentübertragend verbindbar, die wiederum mit einem Mehrblattrotor der Windkraftanlage drehmomentübertragend verbindbar ist. Die Rotorwelle selbst ist mit einem Getriebe drehmomentübertragend verbunden und dient für dieses als Eingangswelle. Das Getriebe gehört zum Antriebsstrang und ist über eine Ausgangswelle drehmomentübertragend mit einem Generator verbunden, der ebenfalls zum Antriebsstrang gehört. Das Getriebe und der Generator können auch in einem gemeinsamen Gehäuse integriert ausgebildet sein. Derartige Generatorgetriebe sind auch als sogenannte Hybrid Drives bekannt. Erfindungsgemäß ist das Getriebe im Antriebsstrang gemäß einer der oben dargestellten Ausführungsformen ausgebildet, insbesondere als Planetengetriebe.

Gleichermaßen wird die eingangs skizzierte Aufgabenstellung durch eine erfindungsgemäße Windkraftanlage gelöst. Die Windkraftanlage umfasst eine Gondel, an der drehbar ein Mehrblattrotor aufgenommen ist. Der Mehrblattrotor ist drehmomentübertragend mit einer Rotorwelle verbunden, die zu einem Antriebsstrang der Windkraftanlage gehört. Der Antriebsstrang ist erfindungsgemäß nach einer der oben beschriebenen Ausführungsformen ausgebildet. Dazu weist der Antriebsstrang als Getriebe ein Planetengetriebe auf, das über eine Ausführungsform der beanspruchten Planetenträgeranordnung verfügt.

Darüber hinaus wird die beschriebene Aufgabe durch ein erfindungsgemäßes Computerprogrammprodukt gelöst, das zu einem Simulieren eines Betriebsverhaltens einer Planetenträgeranordnung ausgebildet ist. Insbesondere kann das Computerprogrammprodukt dazu eingerichtet sein, das Betriebsverhalten der Planetenträgeranordnung zu simulieren, indem der Aufbau der Planetenträgeranordnung darin fest vorgegeben ist. Die zu simulierende Planetenträgeranordnung ist erfindungsgemäß nach einer der oben beschriebenen Ausführungsformen ausgebildet. Das Computerprogrammprodukt kann zur Simulation über ein Physik-Modul verfügen, in dem die Planetenträgeranordnung abgebildet ist und beispielsweise ihr mechanisches oder thermisches Verhalten unter einstellbaren Betriebsbedingungen nachstellbar ist. Beispielsweise gehören zu den einstellbaren Betriebsbedingungen eine Drehzahl, eine Temperatur, ein Druck im Schmierstoff, oder dessen thermisches Verhalten, wie unter anderem eine temperaturabhängiger Viskositätscharakteristik, und/oder eine axiale Verlagerung und/oder radiale Verlagerung des Planetenträgers. Hierzu kann das Computerprogrammprodukt über eine Datenschnittstelle verfügen, über die entsprechende Daten über eine Benutzereingabe und/oder andere simulationsgerichtete Computerprogrammprodukte vorgebbar sind. Das Computerprogrammprodukt kann auch über eine Datenschnittstelle zum Ausgeben von Simulationsresultaten an einen Benutzer und/oder andere simulationsgerichtete Computerprogrammprodukte verfügen. Mittels des Computerprogrammprodukts sind beispielsweise Messdaten von Sensoren an der Planetenträgeranordnung, einem zugehörigen Planetengetriebe, einem zugehörigen Antriebsstrang, oder an einer Windkraftanlage auf Plausibilität prüfbar. Dadurch kann unter anderem ein defekter Sensor identifiziert werden. Das Computerprogrammprodukt kann als sogenannter Digitaler Zwilling ausgebildet sein, wie beispielsweise in der Druckschrift US 2017/286572 A1 näher beschrieben. Der Offenbarungsgehalt von US 2017/286572 A1 wird durch Verweisung in die vorliegende Anmeldung mit einbezogen. Das Computerprogrammprodukt kann monolithisch ausgebildet sein, also vollständig auf einer Hardwareplattform ausführbar. Alternativ kann das Computerprogrammprodukt modular ausgebildet sein und eine Mehrzahl an Teilprogrammen umfassen, die auf separaten Hardwareplattformen ausführbar sind und über eine kommunikative Datenverbindung zusammenwirken. Eine solche kommunikative Datenverbindung kann eine Netzwerkverbindung oder eine Internetverbindung sein. Insbesondere kann das Computerprogrammprodukt in einer Computer-Cloud ausführbar ausgebildet sein. Ferner ist durch das erfindungsgemäße Computerprogrammprodukt eine Planetenträgeranordnung per Simulation erprobt und/oder optimiert werden.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine erste Ausführungsform der beanspruchten Planetenträgeranordnung im Längsschnitt;
- FIG 2: eine Detailansicht der ersten Ausführungsform;
- FIG 3: schematisch eine zweite Ausführungsform der beanspruchten Planetenträgeranordnung in einer Detailansicht im Längsschnitt;
- FIG 4: schematisch eine Ausführungsform der beanspruchten Windkraftanlage in einer geschnittenen Schrägansicht.

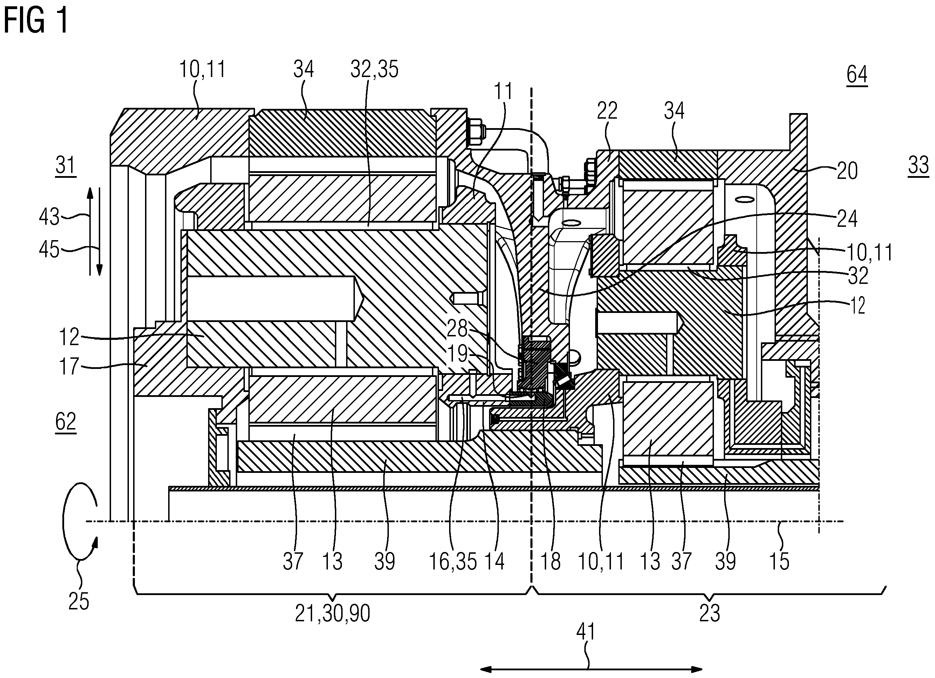

In FIG 1 ist schematisch der Aufbau einer ersten Ausführungsform der beanspruchten Planetenträgeranordnung 30 im Längsschnitt dargestellt. Die Planetenträgeranordnung 30 ist in einem Gehäuse 22 eines Planetengetriebes 20 aufgenommen. Das Planetengetriebe 20 ist von einer Rotorseite 31, von der Drehmoment 25 eingeleitet wird, antreibbar. Zu Einleiten des Drehmoments 25 ist das Planetengetriebe 20 an einer rotorseitigen Nabe 17 mit einer nicht näher dargestellten Rotorwelle 62 verbindbar, die um eine Hauptdrehachse 15 drehbar ist. Dadurch ist ein auf einer Generatorseite 33 ein nicht näher gezeigter Generator 64 antreibbar. Das Planetengetriebe 20 umfasst eine erste Planetenstufe 21, der die Planetenträgeranordnung 30 zugeordnet ist, und eine zweite Planetenstufe 23. Die Planetenträgeranordnung 30 umfasst einen Planetenträger 10, in dem zwischen zwei Wangen 11 zumindest ein Planetenradbolzen 12 angeordnet ist. Auf dem zumindest einen Planetenradbolzen 12 ist ein Gleitlager 32 ausgebildet, das mit einem Schmierstoff 35 zu versorgen ist. Auf dem Gleitlager 32 ist ein Planetenrad 13 drehbar gelagert, das mit einem mit dem Gehäuse 22 verbundenen Hohlrad 34 und einem Sonnenrad 37 kämmt. Der Planetenträger 10 ist im Gehäuse 22 lagerfrei aufgenommen und ist lediglich über die rotorseitige Nabe 17 und eine Sonnenwelle 39 gelagert, die mit dem Sonnenrad 37 verbunden ist. Durch die Sonnenwelle 39 erfolgt wiederum ein Antreiben der zweiten Planetenstufe 23. Die zweite Planetenstufe 23 weist ebenfalls einen Planetenträger 10 mit Wangen 11, mindestens einen Planetenradbolzen 12, ein daran angebrachtes Gleitlager 32, mindestens ein drehbares Planetenrad 13, ein Sonnenrad 37 und eine damit verbundene Sonnenwelle 39 auf.

Der Planetenträger 10 der Planetenträgeranordnung 30 weist eine generatorseitige Nabe 14 auf, in der ein Schmierstoffkanal 16 zum Transport von Schmierstoff 35 zum Gleitlager 13 ausgebildet ist. Der Schmierstoffkanal 16 ist im Wesentlichen in Axialrichtung 41, also parallel zur Hauptdrehachse 15, ausgerichtet ausgebildet. Die generatorseitige Wange 14 ist mit einem Schmierstoffaufnahmeteil 18 verbunden, das dazu ausgebildet ist, Schmierstoff 35 einzusammeln und in den Schmierstoffkanal 16 im Planetenträger 10 zu führen. Zum Einsammeln des Schmierstoffs 35 weist das Schmierstoffaufnahmeteil 18 eine Zufuhröffnung 19 auf, die im Wesentlichen in Radialrichtung 43, 45 ausgebildet ist. Das Schmierstoffaufnahmeteil 18 ist aus zumindest einem Werkstoff ausgebildet, der vorteilhafte Gleiteigenschaften und/oder erhöhte Verschleißfestigkeit bietet. Die Zufuhröffnung 19 ist in eine äußere Radialrichtung 43 offen ausgebildet, und somit zu einem Zusammenwirken mit einem Schmierstoffabgabeteil 28. Eine äußere Radialrichtung 43 und eine innere Radialrichtung 45 sind in FIG 1 mit entsprechenden Pfeilen versinnbildlicht. Das Schmierstoffabgabeteil 28 umgibt das Schmierstoffaufnahmeteil 18 in Umfangsrichtung zumindest teilweise und ist zu einem Abgeben des Schmierstoffs 35 ausgebildet. Der Schmierstoff 35 ist durch eine Wandung 24 des Gehäuses 22 zum Schmierstoffabgabeteil 28 geführt. Die erste und zweite Planetenstufe 21, 23 werden im Wesentlichen durch die Wandung 24 voneinander getrennt. Das Schmierstoffabgabeteil 28 ist mit der Wandung 24 verbunden und dadurch so wie das Gehäuse 22 stationär. Das Schmierstoffaufnahmeteil 18 und das Schmierstoffabgabeteil 28 sind radial gegenüberliegend angeordnet, um einen Transport von Schmierstoff 35 in eine innere Radialrichtung 45 zu gewährleisten. Die Planetenträgeranordnung 30 ist ferner in einem Computerprogrammprodukt 90 abgebildet, das dazu ausgebildet ist, das Betriebsverhalten der Planetenträgeranordnung 30 zu simulieren.

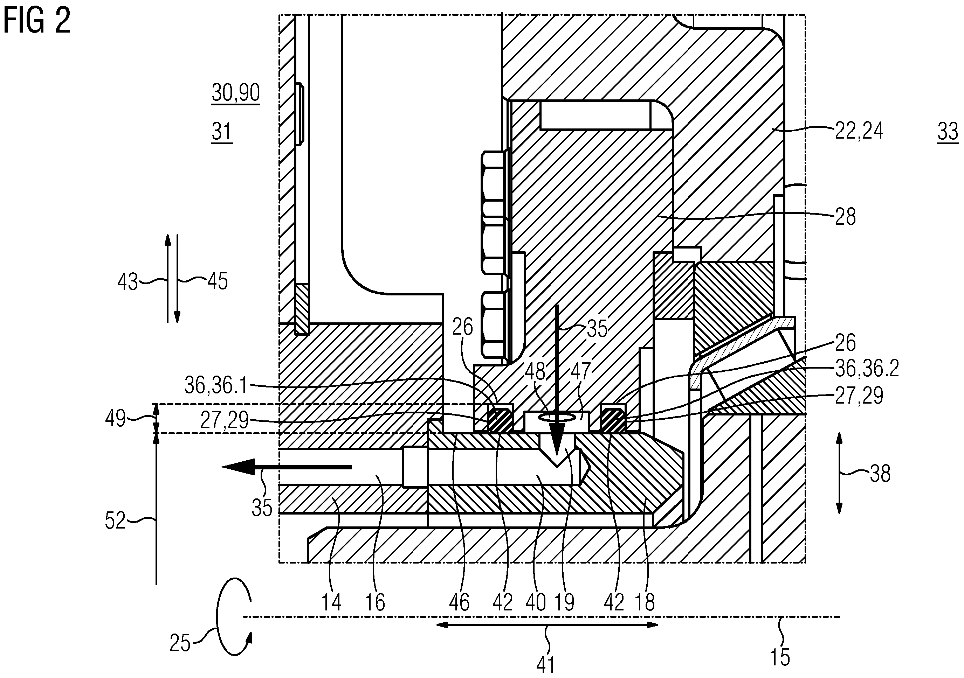

FIG 2 zeigt schematisch eine Detailansicht der ersten Ausführungsform der beanspruchten Planetenträgeranordnung 30 dargestellt. Das Schmierstoffabgabeteil 28 ist zumindest teilweise vom Schmierstoff 35 durchströmt, der durch die Wandung 24 des Gehäuses 22 gefördert wird. Das Schmierstoffabgabeteil 28 ist an einer radialen Innenflächen 47 mit mindestens einer Abgabeöffnung 48 versehen, die im Wesentlich radial gegenüberliegend zur Zufuhröffnung 19 in Schmierstoffaufnahmeteil 18 ausgerichtet ist. Die Zufuhröffnung 19 mündet in einen im Wesentlichen axialen Ölkanal 40 im Schmierstoffaufnahmeteil 18. In Axialrichtung 41 beidseitig benachbart zur Abgabeöffnung 48 und zur Zufuhröffnung 19 sind im Schmierstoffabgabeteil 28 Dichtungsnuten 26 ausgebildet, die im Wesentlichen parallel zur Zufuhröffnung 19 verlaufen. In den Dichtungsnuten 26 ist jeweils ein Dichtring 36 zumindest teilweise aufgenommen, so dass eine dichtende Kontaktfläche 29 ausgebildet wird. Ein erster Dichtring 36.1 ist auch einer rotorseitigen Seite der Abgabeöffnung 48 angeordnet und ein zweite Dichtring 36.2 auf einer generatorseitigen Seite. Die dichtende Kontaktfläche 29 ist jeweils an einer axial äußeren Stirnfläche 27 der entsprechenden Dichtungsnut 26 ausgebildet. Die axial äußere Richtung ist hierbei auf die Zufuhröffnung 19 und/oder die Abgabeöffnung 48 bezogen. Durch einen im Schmierstoff 35 vorliegenden Druck werden die Dichtringe 36 an die jeweilige axial äußere Stirnfläche 27 der jeweiligen Dichtungsnut 26 gedrückt. Hierdurch wird im bestimmungsgemäßen Betrieb an den dichtenden Kontaktflächen 29 eine gesteigerte Dichtwirkung erzielt. Je höher der Druck im Schmierstoff ist, umso eher sind die dichtenden Kontaktflächen 29 im bestimmungsgemäßen Betrieb frei von einer Relativbewegung in Umfangsrichtung zwischen den jeweiligen Dichtringen 36 und dem Schmierstoffabgabeteil 28. Umgekehrt kann bei einem hinreichend niedrigen Druck im Schmierstoff 35 zwischen den jeweiligen Dichtringen 36 und dem Schmierstoffabgabeteil 28 an den dichtenden Kontaktflächen 29 eine Relativbewegung in Umfangsrichtung vorliegen.

Darüber hinaus liegt jeweils ein Kontakt zwischen den Dichtringen 36 und dem Schmierstoffaufnahmeteil 18 vor, durch die Radialdichtflächen 42 auf einer Außenfläche 46 ausgebildet sind. Durch die Außenfläche 46 ist der Außendurchmesser 52 des Schmierstoffaufnahmeteils 18 definiert. Dadurch wird ebenfalls eine Dichtwirkung hervorgerufen, die ein Austritt von Schmierstoff 35 minimiert oder unterbindet. Je enger eine Passung zwischen den jeweiligen Dichtringen 36 und dem Schmierstoffaufnahmeteil 18 ausgebildet ist, umso stärker sind diese drehfest mit dem Schmierstoffaufnahmeteil 18 verbunden. Je weiter die Passung zwischen den jeweiligen Dichtringen 36 und dem Schmierstoffaufnahmeteil 18, umso leichter tritt an den Radialdichtflächen 42 eine Relativbewegung in Umfangsrichtung vor. In Abhängigkeit von vorliegenden Druck Schmierstoff 35 kann in bestimmungsgemäßen Betrieb eine Relativbewegung in Umfangsrichtung an den dichtenden Kontaktflächen 29 oder den Radialdichtflächen 42 vorliegen. Das Betriebsverhalten des Schmierstoffabgabeteils 28 im Zusammenspiel 18 ist so durch entsprechende Auswahl von Dichtringen 36, eine Dimensionierung der Dichtungsnuten 26 und/oder die Auswahl eines Drucks des Schmierstoffs 35 einstellbar. Dieses Betriebsverhalten ist über ein Computerprogrammprodukt 90 simulierbar, in dem die Planetenträgeranordnung 30 abgebildet ist.

Die Dichtungsnuten 26 weisen jeweils eine radiale Tiefe 49 auf, die zumindest einer maximal zulässigen Radialauslenkung 38 des Planetenträgers 10 entspricht. Die dichtenden Kontaktflächen 29 an den axial äußeren Stirnflächen 27 erlauben dem entsprechenden Dichtring 36 eine radiale Relativbewegung, so dass auch bei deiner entsprechenden Radialauslenkung 38 des Planetenträgers 10 eine ausreichende Dichtwirkung vorliegt. Dies gehört zu einem Betriebsverhalten der Planetenträgeranordnung 30, das über ein Computerprogrammprodukt 90 simulierbar ist. Die Planetenträgeranordnung 30 bietet auch bei erhöhten Außendurchmessern 52 des Schmierstoffaufnahmeteils 18, insbesondere bei Außendurchmessern 52 von mindestens 150 mm, bevorzugt von mindestens 200 mm, weiter bevorzugt von mindestens 500 mm, besonders bevorzugt von mindestens 700 mm, eine verbesserte Dichtwirkung. Bei Planetengetrieben 20 mit erhöhtem Nenndrehmoment können diese mit erhöhten Sonnenraddurchmessern und Sonnenwellendurchmessern ausgebildet werden. Ferner ist die Planetenträgeranordnung 30 besonders für den lagerfrei im Gehäuse 22 aufgenommenen Planetenträger 10 geeignet. Insgesamt wird so ein zuverlässiger Betrieb in derartigen Planetengetrieben 20 erzielt.

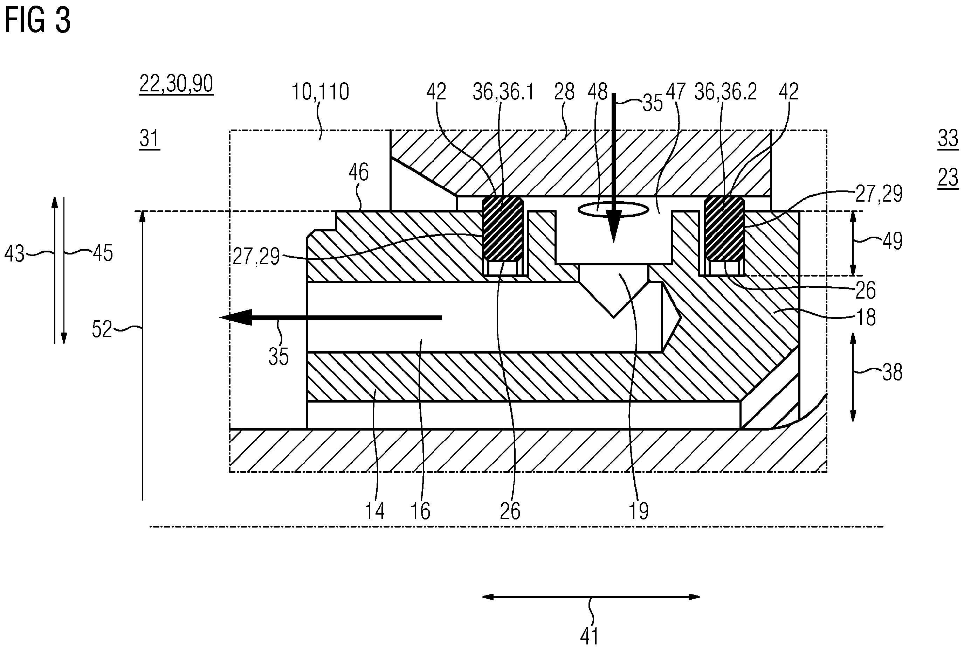

In FIG 3 ist schematisch eine zweite Ausführungsform der beanspruchten Planetenträgeranordnung 30 in einer Detailansicht dargestellt. Der weitere Aufbau entspricht im Wesentlichen dem aus FIG 1. Die zweite Ausführungsform der beanspruchten Planetenträgeranordnung 30 ist im Wesentlichen eine Umkehrung der ersten Ausführungsform nach FIG 2. Die Ausführungsform nach FIG 3 umfasst ein Schmierstoffaufnahmeteil 18, das an einer der zweiten Planetenstufe 23 zugewandten, also generatorseitigen, Wange 11 am Planetenträger 10 angebracht ist. Eine generatorseitige Nabe 14 des Planetenträgers 10, in der ein Ölkanal 16 ausgebildet ist, der zu einer Versorgung eines Gleitlagers 32 mit Schmierstoff 35 dient. Dazu ist das Schmierstoffaufnahmeteil 18 mit einer Zufuhröffnung 19 versehen, die in einen im Wesentlichen axialen Ölkanal 40 mündet. Die Zufuhröffnung 19 ist dazu geeignet, aus einem Schmierstoffabgabeteil 28 abgegebenen Schmierstoff 35 zu sammeln und dem Planetenträger 10 zuzuführen. Axial benachbart zur Zufuhröffnung 19 und einer Abgabeöffnung 48 für Schmierstoff 35 an einer radialen Innenfläche 47 im Schmierstoffabgabeteil 28 sind im Schmierstoffaufnahmeteil 18 Dichtungsnuten 26 ausgebildet. Die Dichtungsnuten 26 sind in einer Außenfläche 46 des Schmierstoffaufnahmeteils 18 im Wesentlichen parallel zur Zufuhröffnung 19 ausgebildet und ebenfalls umlaufend. Durch die Außenfläche 46 ist auch der Außendurchmesser 52 des Schmierstoffaufnahmeteils 18 definiert. In den Dichtungsnuten 26 ist jeweils ein Dichtring 36 zumindest teilweise aufgenommen, die jeweils eine dichtende Kontaktfläche 29 ausbilden. Ein erster Dichtring 36.1 ist rotorseitig der Zufuhröffnung 19 bzw. der Abgabeöffnung 48 positioniert und ein zweiter Dichtring 36.2 generatorseitig. Die dichtenden Kontaktflächen 29 sind jeweils an einer axial äußeren Stirnfläche 27 der entsprechenden Dichtungsnut 26 ausgebildet. Durch die Anordnung der Dichtringe 36 werden diese durch einen im Schmierstoff 35 vorliegenden Druck gegen die axial äußeren Stirnflächen 27 der Dichtungsnuten 26 gedrückt. Dadurch ist die Dichtwirkung an den dichtenden Kontaktflächen 29 steigerbar. In Abhängigkeit vom vorliegenden Druck im Schmierstoff 35 kann im Betrieb an der dichtenden Kontaktfläche 29 zwischen einem der Dichtringe 36 und der entsprechenden axial äußeren Stirnfläche 27 eine Relativbewegung in Umfangsrichtung vorliegen. Darüber hinaus liegen zwischen den Dichtringen 36 und dem Schmierstoffabgabeteil 28 Radialdichtflächen 42 vor. Die durch die Radialdichtflächen 42 hervorgerufene Dichtwirkung ist durch eine Auswahl einer Passung zwischen den Dichtringen 36 und der Bemaßung des Schmierstoffabgabeteils 28 im Bereich der Abgabeöffnung 48 vorgebbar. Je enger die Passung zwischen einem Dichtring 36 und dem Schmierstoffabgabeteil 28 ist, umso stärker ist die Dichtwirkung. Je weiter diese Passung ist, umso eher tritt im Betrieb zwischen dem entsprechenden Dichtring 36 und dem Schmierstoffabgabeteil 28 in Umfangrichtung eine Relativbewegung vor. Im Zusammenwirken mit dem im Schmierstoff 35 vorliegenden Druck ist einstellbar, ob im Betrieb an den dichtenden Kontaktflächen 29 oder den Radialdichtflächen 42 eine Relativbewegung in Umfangsrichtung vorliegt.

Die Dichtungsnuten 26 weisen eine radiale Tiefe 49 auf, die zumindest einer maximalen Radialauslenkung 38 des Schmierstoffaufnahmeteils 18 entspricht. Ein im Betrieb auftretender Radialversatz ist durch eine Bewegung der Dichtringe 36 in den Dichtungsnuten 26 ausgleichbar und gleichzeitig zuverlässig die Dichtwirkung an den dichtenden Kontaktflächen 29 und den Radialdichtflächen 42 gewährleistet. Dies erlaubt es beispielsweise, den Planetenträger 10 lagerfrei im Gehäuse 22 anzuordnen. Das Ausgleichsverhalten gehört zum Betriebsverhalten der Planetenträgeranordnung 30, das über ein Computerprogrammprodukt 90 simulierbar ist.

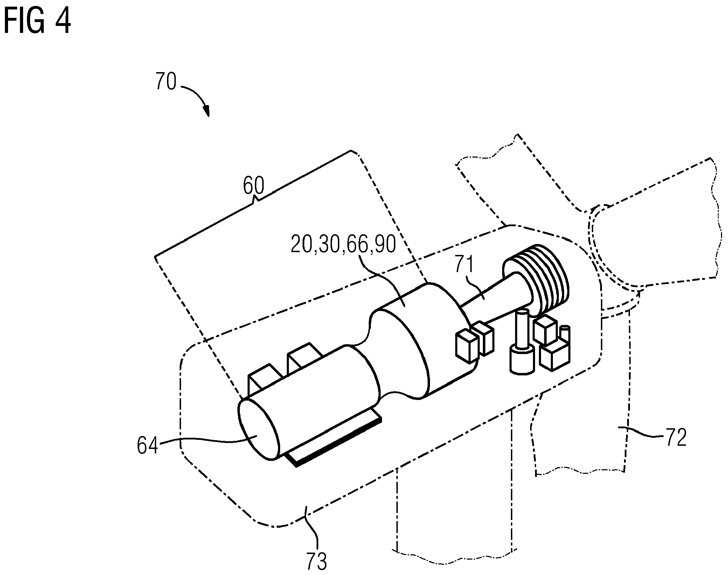

Eine Ausführungsform einer beanspruchten Windkraftanlage 70, die eine Gondel 73 umfasst, an der ein Mehrblattrotor 72 drehbar angebracht ist, ist in FIG 4 dargestellt. Der Mehrblattrotor 72 ist über eine Rotorwelle 62 drehmomentübertragend mit einem Antriebsstrang 60 verbunden. Der Antriebsstrang 60 umfasst ein Getriebe 66, das drehmomentübertragend mit einem Generator 64 verbunden ist. Das Getriebe 66 ist als Planetengetriebe 20 ausgebildet, das eine Planetenträgeranordnung 30 aufweist. Die Planetenträgeranordnung 30 ist dabei gemäß einer der oben skizzierten Ausführungsformen ausgebildet. Das Betriebsverhalten der Planetenträgeranordnung 30 ferner durch ein entsprechendes Computerprogrammprodukt 90 simulierbar, in dem die Planetenträgeranordnung 30 abgebildet ist. Insgesamt bietet die Ausführungsform nach FIG 4 ebenfalls eine zuverlässige und gesteigerte Dichtwirkung bei erhöhtem Außendurchmesser 52 des Schmierstoffaufnahmeteils 18. Dadurch ist bei Planetengetrieben 20 mit erhöhtem Nenndrehmoment ein zuverlässiger Betrieb gewährleistet.

## Patentansprüche

1. Planetenträgeranordnung (30), umfassend einen Planetenträger (10), der drehbar in einem Gehäuse (22) angeordnet ist und ein Schmierstoffaufnahmeteil (18) aufweist, in dem eine Zufuhröffnung (19) ausgebildet ist, **dadurch gekennzeichnet, dass** am Schmierstoffaufnahmeteil (18) und/oder an einem Schmierstoffabgabeteil (28), das mit dem Gehäuse (22) verbunden ist, zumindest eine zur Zufuhröffnung (19) parallele Dichtungsnut (26) zur Ausbildung einer dichtenden Kontaktfläche (29) ausgebildet ist.

2. Planetenträgeranordnung (30) nach Anspruch 1, **dadurch gekennzeichnet, dass** in der zumindest einen Dichtungsnut (26) ein Dichtring (36) zumindest teilweise aufgenommen ist.

3. Planetenträgeranordnung (30) nach Anspruch 1 oder 2, **dadurch gekennzeichnet, dass** die dichtende Kontaktfläche (29) an einer axial äußeren Stirnfläche (27) der zumindest einen Dichtungsnut (26) ausgebildet ist.

4. Planetenträgeranordnung (30) nach einem der Ansprüche 1 bis 3, **dadurch gekennzeichnet, dass** das Schmierstoffaufnahmeteil (18) zerstörungsfrei vom Planetenträger (10) demontierbar ausgebildet ist.

5. Planetenträgeranordnung (30) nach einem der Ansprüche 1 bis 4, **dadurch gekennzeichnet, dass** der Planetenträger (10) drehbar in einer Lageranordnung aufgenommen ist, die auf einer dem Schmierstoffaufnahmeteil (18) abgewandten Seite des Planetenträgers (10) angeordnet ist, oder lagerfrei im Gehäuse (22) aufgenommen ist.

6. Planetenträgeranordnung (30) nach einem der Ansprüche 1 bis 5, **dadurch gekennzeichnet, dass** die zumindest eine Dichtungsnut (26) eine radiale Tiefe (49) aufweist, die zumindest einer maximalen Radialauslenkung (38) des Schmierstoffaufnahmeteils (18) entspricht.

7. Planetenträgeranordnung (30) nach einem der Ansprüche 1 bis 6, **dadurch gekennzeichnet, dass** am Schmierstoffabgabeteil (28) und/oder am Schmierstoffaufnahmeteil (18) zumindest eine Radialdichtfläche (42) ausgebildet ist.

8. Planetenträgeranordnung (30) nach einem der Ansprüche 1 bis 7, **dadurch gekennzeichnet, dass** die Zufuhröffnung (19) axial zwischen zwei Dichtungsnuten (26) angeordnet ist.

9. Planetenträgeranordnung (30) nach einem der Ansprüche 1 bis 8, **dadurch gekennzeichnet, dass** das Schmierstoffaufnahmeteil (18) zumindest teilweise eine Nabe (14) des Planetenträgers (10) bildet.

10. Planetenträgeranordnung (30) nach einem der Ansprüche 1 bis 9, **dadurch gekennzeichnet, dass** das Schmierstoffaufnahmeteil (18) einen Außendurchmesser (52) von mindestens 150 mm aufweist.

11. Planetenträgeranordnung (30) nach einem der Ansprüche 1 bis 10, **dadurch gekennzeichnet, dass** die zumindest eine Dichtungsnut (26) dazu ausgebildet ist, dass die Planetenträgeranordnung (30) einen Auslegungsdruck für den Schmierstoff (35) und eine korrespondierende Drehzahl des Planetenträgers (10) aufweist, die einen Gleitübergang charakterisieren.

12. Planetengetriebe (20), umfassend zumindest eine erste Planetenstufe (21), die eine Planetenträgeranordnung (30) aufweist, **dadurch gekennzeichnet, dass** die Planetenträgeranordnung (30) nach einem der Ansprüche 1 bis 11 ausgebildet ist.

13. Planetengetriebe (20) nach Anspruch 12, **dadurch gekennzeichnet, dass** im Planetenträger (10) zumindest fünf Planetenräder (13) aufgenommen sind.

14. Planetengetriebe (20) nach Anspruch 12 oder 13, **dadurch gekennzeichnet, dass** das Planetengetriebe (20) eine zweite und eine dritte Planetenstufe (23) aufweist.

15. Antriebsstrang (60), der mit einer Rotorwelle (62) drehmomentübertragend verbindbar ist, umfassend ein Getriebe (66), das drehmomentübertragend mit einem Generator (64) verbunden ist, **dadurch gekennzeichnet, dass** das Getriebe (66) als Planetengetriebe (20) nach einem der Ansprüche 12 bis 14 ausgebildet ist.

16. Windkraftanlage (70), umfassend eine Gondel (73), an der ein Mehrblattrotor (72) drehbar angeordnet ist und mit einem Antriebsstrang (60) drehmomentübertragend verbunden ist, **dadurch gekennzeichnet, dass** der Antriebsstrang (60) nach Anspruch 15 ausgebildet ist.

17. Computerprogrammprodukt (90) zum Simulieren eines Betriebsverhaltens einer Planetenträgeranordnung (30), die in einem Planetengetriebe (20) aufgenommen ist, **dadurch gekennzeichnet, dass** die Planetenträgeranordnung (30) nach einem der Ansprüche 1 bis 11 ausgebildet ist.
